# EUROPÄISCHE PATENTANMELDUNG

(11) **EP 1 256 902 A1**
(43) Veröffentlichungstag der Anmeldung: **13.11.2002**
(21) Anmeldenummer: 02009639.2
(22) Anmeldetag: 27.04.2002
(51) Int. Cl.: G06K 11/06

(54) **Tablett insbesondere Grafiktablett**

(30) Priorität: 10.05.2001 DE 10122634
(71) Anmelder: BS Biometric Systems GmbH, 53123 Bonn (DE)
(72) Erfinder: Woop, Marc-Bernd, 53123 Bonn (DE); Von Kannen-Steinert, Volker, 63839 Kleinwallstadt (DE); Baltus, René, 53125 Bonn (DE)
(74) Vertreter: COHAUSZ DAWIDOWICZ HANNIG & PARTNER

(57) **Zusammenfassung**

Die Erfindung betrifft eine Vorrichtung insbesondere Grafiktablett oder Touchscreen zum digitalen Übertragen der Positionen eines auf der Vorrichtungsoberfläche bewegten Stiftes zu einem angeschlossenen Rechner. Zusätzlich zu den digitalen Informationen der Positionen des Stiftes ist ein einziger (oder mindestens ein) Drucksensor angeordnet, der an jeder Stelle der Vorrichtungsoberfläche den vom Stift auf die Vorrichtungsoberfläche ausgeübten Druck misst, und die zusätzlichen Druckmesswerte zum Rechner auch übertragbar sind.

## Beschreibung

Die Erfindung betrifft eine Vorrichtung insbesondere Grafiktablett oder Touchscreen zum digitalen Übertragen der Positionen eines auf der Vorrichtungsoberfläche bewegten Stiftes zu einem angeschlossenen Rechner.

Es sind druckempfindliche Grafiktabletts bekannt, auf denen mit einem Stift gezeichnet wird, wobei das Tablett die jeweilige Position des Stiftes erfasst und einem Rechner überträgt. Ferner ist es bekannt, eine nicht sensitive Fläche an den vier Ecken auf Drucksensoren zu lagern, um hierdurch die vom Stift erzeugten Drücke zu erfassen.

Aufgabe der Erfindung ist es, eine Vorrichtung der eingangs genannten Art so zu verbessern, dass bei einfacher Konstruktion und Handhabung eine besonders sichere und genaue Übertragung von Grafik/Schrift und insbesondere von Unterschriften erreicht wird.

Diese Aufgabe wird erfindungsgemäß dadurch gelöst, dass zusätzlich zu den digitalen Informationen der Positionen des Stiftes ein einziger (oder mindestens ein) Drucksensor angeordnet ist, der an jeder Stelle der Vorrichtungsoberfläche den vom Stift auf die Vorrichtungsoberfläche ausgeübten Druck misst, und die zusätzlichen Druckmesswerte zum Rechner auch übertragbar sind.

Mit einfachsten technischen Mitteln wird ein exaktes Erfassen und Übertragen von Grafik und Schrift erreicht, die durch einen auf der Oberfläche bewegten Stift erzeugt werden.

Besonders vorteilhaft ist es hierbei, wenn der zusätzliche Drucksensor unterhalb der Vorrichtungsoberfläche befestigt ist. Hierbei kann der zusätzliche Drucksensor ein Dehnmessstreifen sein, der an der Unterseite der Vorrichtungsoberfläche oder der elastischen Trägerplatte befestigt ist. Alternativ kann aber auch an der Unterseite des (der) Tabletts/Trägerplatte ein Vorsprung vorstehen, der auf einem darunter liegenden Drucksensor aufliegt.

Vorzugsweise wird vorgeschlagen, dass die Ränder des (der) Tabletts/Trägerplatte beweglich gelagert sind. Auch ist von Vorteil, wenn die Vorrichtungsoberfläche mindestens eine druckempfindliche Folie aufweist. Besonders vorteilhaft ist es, wenn die Vorrichtungsoberfläche ein Display oder einen Flachbildschirm aufweist.

Zwei Ausführungsbeispiele der Erfindung sind in den Zeichnungen im senkrechten Schnitt dargestellt und werden im folgenden näher beschrieben. Es zeigen
- Fig. 1: ein erstes Ausführungsbeispiel mit den Messstreifen an der Tablettunterseite und
- Fig. 2: ein zweites Ausführungsbeispiel mit einem mittigen Drucksensor.

Die Vorrichtung weist eine elastische Trägerplatte 1 auf, mit einer darüber liegenden drucksensitiven Schicht 2, die die Vorrichtungs- bzw. Tablettoberfläche 3 bildet. Auf dieser Oberfläche 3 kann mit einem Stift von Hand geschrieben und grafische Elemente erzeugt werden. Die hierdurch erzeugten digitalen Daten werden über eine Schnittstelle einem Rechner übertragen.

Die elastische Trägerplatte 1 ist an ihren Rändern in einem Gehäuse insbesondere in einem Rahmen 4 rundum befestigt.

An der Unterseite der Trägerplatte 1 sind ein oder mehrere Dehnmessstreifen befestigt insbesondere angeklebt, die die vom Stift erzeugten Drücke erfassen und über dieselbe Schnittstelle dem Rechner übertragen werden. Durch diese zusätzlichen Druckdaten können insbesondere Unterschriften fälschungssicher übertragen werden.

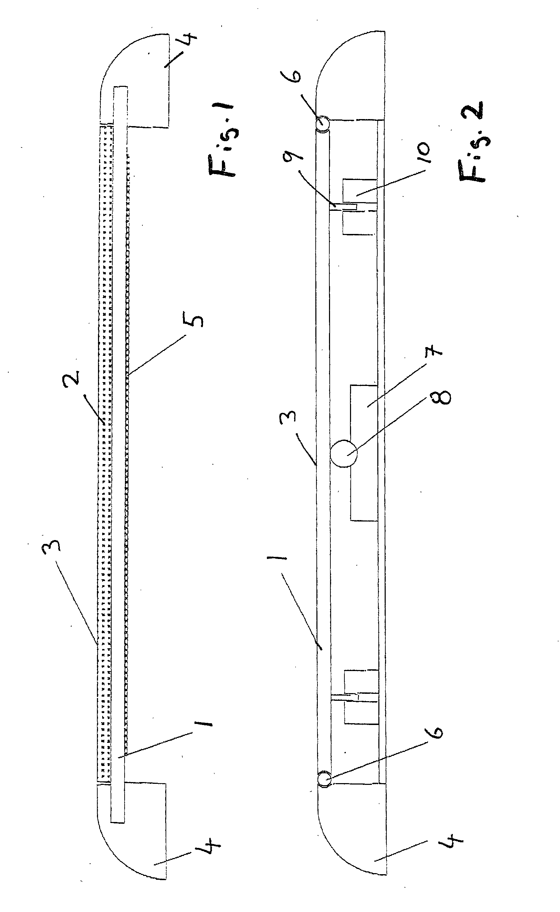

Das Ausführungsbeispiel nach Fig. 2 unterscheidet sich von dem nach Fig. 1 dadurch, dass die Trägerplatte 1 über Lager 6 mit dem Gehäuse bzw. Rahmen 4 verbunden ist. Statt eines Dehnmessstreifens ist ein Drucksensor mittig unterhalb der elastischen Trägerplatte 1 angeordnet. Hierbei wird der Druck über ein kugelförmiges Übertragungsteil 8 von der Trägerplatte 1 zum Sensor 7 übertragen.

An der Unterseite der Trägerplatte 1 stehen senkrechte Stifte 9 vor, die in Führungsblöcke 10 hineinragen und eine zusätzliche Führung und Lagerung bilden.

Bei beiden Konstruktionen werden auf konstruktiv einfache Weise die vom Stift erzeugten Drücke durch die Vorrichtung 5 oder 7 erfasst und bilden eine sehr sensible und feinstimmige Druckmessung. Während die Oberfläche 3 oder zwischen der Oberfläche 3 und der Trägerplatte 1 befindliche Schichten nur die X- und Y-Koordinaten der jeweiligen Lage des Stiftes erfassen, führt die zusätzliche Druckerfassung durch die Drucksensoren 5 oder 7 zu einer besonders genauen Druckmessung des vom Stift auf die Oberfläche 3 ausgeübten Druckes.

## Patentansprüche

1. Vorrichtung insbesondere Grafiktablett oder Touchscreen zum digitalen Übertragen der Positionen eines auf der Vorrichtungsoberfläche (3) bewegten Stiftes zu einem angeschlossenen Rechner, **dadurch gekennzeichnet, dass** zusätzlich zu den digitalen Informationen der Positionen des Stiftes ein einziger (oder mindestens ein) Drucksensor (5, 7) angeordnet ist, der an jeder Stelle der Vorrichtungsoberfläche den vom Stift auf die Vorrichtungsoberfläche (3) ausgeübten Druck misst, und die zusätzlichen Druckmesswerte zum Rechner auch übertragbar sind.

2. , Vorrichtung nach Anspruch 1, **dadurch gekennzeichnet, dass** der zusätzliche Drucksensor (5, 7) unterhalb der Vorrichtungsoberfläche (3) befestigt ist.

3. Vorrichtung nach Anspruch 2, **dadurch gekennzeichnet, dass** der zusätzliche Drucksensor (5, 7) ein Dehnmessstreifen ist, der an der Unterseite der Vorrichtungsoberfläche (3) oder der elastischen Trägerplatte (1) befestigt ist.

4. Vorrichtung nach Anspruch 2, **dadurch gekennzeichnet, dass** an der Unterseite des (der) Tabletts/Trägerplatte (1) ein Vorsprung (8) vorsteht, der auf einem darunter liegenden Drucksensor (7) aufliegt.

5. Vorrichtung nach einem der vorherigen Ansprüche, **dadurch gekennzeichnet, dass** die Ränder des (der) Tabletts/Trägerplatte (1) beweglich gelagert sind.

6. Vorrichtung nach einem der vorherigen Ansprüche, **dadurch gekennzeichnet, dass** die Vorrichtungsoberfläche (3) mindestens eine druckempfindliche Folie aufweist.

7. Vorrichtung nach einem der vorherigen Ansprüche, **dadurch gekennzeichnet, dass** die Vorrichtungsoberfläche (3) ein Display oder einen Flachbildschirm aufweist.
